# EUROPÄISCHE PATENTSCHRIFT

(11) **EP 0 929 135 B1**
(45) Veröffentlichungstag und Bekanntmachung des Hinweises auf die Patenterteilung: **28.02.2007**
(21) Anmeldenummer: 98123629.2
(22) Anmeldetag: 10.12.1998
(51) Int. Cl.: H02B 1/21

(54) **Multifunktionsadapter für eine Anzahl von Stromsammelschienen eines Sammelschienensystems**
Multifunctional adapter for a number of busbars from a busbar system
Adaptateur multifonction pour des barres d'un système de barres omnibus

(30) Priorität: 15.12.1997 DE 19755848
(43) Veröffentlichungstag der Anmeldung: 14.07.1999
(73) Patentinhaber: Rittal-Werk Rudolf Loh GmbH & Co. KG, 35745 Herborn (DE)
(72) Erfinder: Wagener, Hans, 35716 Dietzhötztal (DE)
(74) Vertreter: Fleck, Hermann-Joseph

(56) Entgegenhaltungen:
- EP-A- 0 642 197
- EP-A- 0 762 581

## Beschreibung

Die Erfindung betrifft einen Multifunktionsadapter mit einem Basisgehäuse, an dem entsprechend der Anzahl von Stromsammelschienen eines Sammelschienensystems Einhängehaken angeformt sind, die entsprechend dem Abstand der Stromsammelschienen in Längsrichtung des Basisgehäuses gegeneinander versetzt und Ober Kontaktschienen-Aufnahmen zum Einsatz von Verbindungskontakten zugänglich sind, welche die eingesetzten Kontaktschienen mit den Stromsammelschienen verbinden, wobei die Schmalseitenwände, die Längsseitenwände und die Oberseite des Basisgehäuses mit Rastansätzen versehene Rastaufnahmen aufweisen, mittels derer mit entsprechend ausgebildeten und verteilten Rastfedern versehene Schmalseitenabdeckelemente und Oberseitenabdeckelemente mit dem Basisgehäuse verbindbar sind.

Ein Sammelschienen-Adapter mit den Merkmalen des Oberbegriffs des Anspruches 1 ist in der DE 195 15 923 A1 beschrieben.

Es sind verschiedene Arten von Sammelschienenadapter bekannt, die als Einspeise-, Anschluss-, Geräte- oder Anreihadapter ausgebildet sind. Diese Adapter weisen jeweils ein individuell auf den vorgesehenen Einsatzfall ausgebildetes und abgestimmtes Basisgehäuse auf. Dies bedingt einen erheblichen Werkzeugaufwand für die verschiedenen Basisgehäuse, die daher auch nicht kostengünstig hergestellt werden können. Erschwerend kommt dabei hinzu, dass es eine Vielzahl unterschiedlicher Sammelschienensysteme gibt, die sich in der Anzahl der Stromsammelschienen, im Querschnitt und im Abstand der Stromsammelschienen unterscheiden.

Wie die EP 0 642 197 B1, EP 0 762 581 A1 und EP 0 762 582 A1 zeigen, sind auch Sammelschienenadapter bekannt, die aus einem Adapterunterteil und einem Adapteroberteil zusammengesetzt sind. Dabei werden beide Adapterteile mittels Rastverbindungen miteinander verbunden. Die Adapteroberteile können mit weiteren Adapteroberteilen verbunden werden, so dass die Baugröße in Längsrichtung des Sammelschienensystems für weitere Installationsgeräte erweitert werden kann. Dabei ist jedoch die Ausbildung des Adapters stets als Geräteadapter für eine ganz bestimmte Bauweise und Befestigungsart der Installationsgeräte beschränkt.

Es ist Aufgabe der Erfindung, einen Multifunktionsadapter der eingangs erwähnten Art zu schaffen, der für ein vorgegebenes Sammelschienensystem mit einem geringen Teileaufwand wahlweise als Einspeise-, Anschluss-, Geräte- oder Anreihadapter ausgelegt werden kann.

Diese Aufgabe wird nach der Erfindung dadurch gelöst, dass Lochleisten vorgesehen sind, die an ihrer Unterseite angeformte, erste Rastfedern tragen, die auf die entlang der Längsseiten des Basisgehäuses eingebrachten Rastaufnahmen abgestimmt und ausgerichtet sind, und dass Geräteanschfusselemente vorgesehen sind, die auf ihrer Unterseite verteilt angeformte Rastfedern tragen, die zumindest auf einen Teil der Rastaufnahmen abgestimmt und ausgerichtet sind.

In jedem Fall wird das Basisgehäuse mit der Vielzahl verteilter Rastaufnahmen verwendet, an dem je nach Verwendung des Adapters die erforderlichen Teile, wie Schmalseitenabdeckelemente, Oberseitenabdeckelemente, Lochleisten und Geräteanschlusselemente, angebracht werden. Dabei brauchen diese Zusatzelemente lediglich mit dem Basisgehäuse verrastet werden. Die Teile bilden eine Art Bausatz, mit dem verschiedene Adapter aufgebaut werden können. Dabei sind die Teile einfach und kostengünstig herstellbar. Auch die Montage des Adapters ist durch die angewandte Rastverbindung einfach und schnell ausführbar.

Ist nach einer Ausgestaltung vorgesehen, dass die Kontaktschienen-Aufnahmen im Bereich der Einhängehaken eine Rastaufnahme bilden, in die der in einem Kontaktträger gehaltene Verbindungskontakt einrastbar ist, dann können die Verbindungskontakte vor dem Einbringen der Kontaktschienen in den Basiskörper bereits in den Einhängehaken in Position gebracht werden.

Eine weitere Ausgestaltung sieht vor, dass die Kontaktschienen-Aufnahmen im Bereich der Schmalseiten des Basisgehäuses in Kontakt-Aufnahmen enden, in die handelsübliche und mit den Kontaktschienen verbindbare Anschlusskontakte einsetzbar und mit einem Oberseitenabdeckelement und/oder einem Schmalseitenabdeckelement darin festlegbar sind. Dies eröffnet die Möglichkeit, mit der Ausbildung der Kontaktschienen und Bestückung der Kontaktaufnahmen an einer oder an beiden Schmalseiten des Basisgehäuses Anschlussmöglichkeiten vorzusehen.

Wird die Ausgestaltung so vorgenommen, daß in die Oberseite des Basisgehäuses entlang der Längsseiten desselben eine Reihe von als vertikal ausgerichtete Steckaufnahmen ausgebildete Rastaufnahmen mit Rastansatz eingebracht sind, dann können darüber Lochleisten für aufsteckbare Aufsatzteile für Schaltgeräte festgelegt werden, wie sie z.B. die DE 90 01 941 U1 zeigt. Die Aufsatzteile können aber auch direkt am Basisgehäuse angebracht werden, wenn vorgesehen ist, daß entlang der Oberseite der Längsseitenwände des Basisgehäuses zusätzliche Lochreihen zum Aufstecken an sich bekannter Aufsatzteile für Schaltgeräte eingebracht sind.

Ist vorgesehen, daß in die Oberseite der die Kontaktschienen-Aufnahmen begrenzenden Wandteile des Basisgehäuses verteilt als vertikale Steckaufnahmen ausgebildete Rastaufnahmen eingebracht sind, dann lassen sich auch in diesem Bereich der Oberseite des Basisgehäuses Zusatzteile anbringen.

Zur Befestigung der Lochleisten an dem Basisgehäuse ist nach einer Ausgestaltung vorgesehen, daß die Lochleisten an ihrer Unterseite angeformte, erste Rastfedern tragen, die auf die entlang der Längsseiten des Basisgehäuses eingebrachten Rastaufnahmen abgestimmt und ausgerichtet sind. Dabei wird der Halt der Lochleisten dadurch erheblich verbessert, daß die Lochleisten bündig mit den Außenseiten der Längsseitenwände des Basisgehäuses abschließen und zusätzliche zweite Rastfedern tragen, die in als Aufnahmenuten in den Längsseitenwänden ausgebildeten Rastaufnahmen verrastbar sind, wobei die ersten Rastfedern und die zweiten Rastfedern bündig mit den Außenlängsseiten der Lochleisten abschließen und mit ihren Rastansätzen gegeneinander gerichtet sind.

Die Oberseitenabdeckelemente und die Geräteanschlußelemente werden vorzugsweise so befestigt, daß die Oberseitenabdeckelemente und die Geräteanschlußelemente auf ihrer Unterseite verteilt angeformte Rastfedern tragen, die zumindest auf einen Teil der Rastaufnahmen abgestimmt und ausgerichtet sind, die in die Oberseite der die Kontaktschienen-Aufnahmen begrenzenden Wandteile des Basisgehäuses unter Freilassung der entlang der Längsseitenwände eingebrachten Rastaufnahmen eingebracht sind. Dies ermöglicht auch, daß zusätzlich zu diesen Lochleisten am Basisgehäuse angebracht werden können.

Für die Abdeckung der Schmalseiten ist nach einer Ausgestaltung vorgesehen, daß die Schmalseitenabdeckelemente eine Abdeckplatte mit einem Fensterdurchbruch zu den Kontakt-Aufnahmen des Basisgehäuses aufweisen, daß an der Abdeckplatte ein mit Durchbrüchen zu den Kontakt-Aufnahmen versehene Deckplatte angeformt ist und daß die Rastfedern der Schmalseitenabdeckelemente in als Außennuten mit Rastabsatz ausgebildete Rastaufnahmen des Basisgehäuses einrastbar sind. Die Schmalseitenabdeckelemente lassen daher über den Fensterdurchbruch den Zugang zu den Kontaktaufnahmen des Basisgehäuses bestehen. Anstelle des Endabdeckelementes kann auch ein anders gestaltetes Schmalseitenabdeckelement am Basisgehäuse angebracht werden, wenn dieses entsprechend abgestimmte und verteilte Rastfedern trägt. Es können wahlweise eine oder beide Schmalseiten mit einem Schmalseitenabdeckelement versehen werden.

Eine Weiterbildung sieht vor, daß die Außenseiten der Längsseitenwände und Schmalseitenwände des Basisgehäuses mit vertikalen Schwalbenschwanznuten versehen sind, über die weitere Adapter oder andere Abdeckelemente am Basisgehäuse anreihbar oder anbringbar sind. An den Längsseitenwänden können dann auch Zusatzelemente angereiht werden.

Die Geräteanschlußelemente können an bestimmte Schaltgeräte angepaßte Aufsatzteile tragen, die auch einstückig angeformt sein können.

Die Erfindung wird anhand eines in den Zeichnungen dargestellten Ausführungsbeispiels näher erläutert. Es zeigen:
- Fig. 1: eine Ansicht auf die Längsseitenwand eines Basisgehäuses nach der Erfindung,
- Fig. 2: die Ansicht auf die Oberseite des Basisgehäuses nach Fig. 1,
- Fig. 3: einen Querschnitt durch das Basisgehäuse entlang der Linie C-D nach Fig. 1,
- Fig. 4: einen Querschnitt durch das Basisgehäuse entlang der Linie J-K der Fig. 1,
- Fig. 5: einen Längsschnitt durch das Basisgehäuse entlang der Linie A-B der Fig. 1,
- Fig. 6: die Ansicht auf die Unterseite des Basisgehäuses nach Fig. 1,
- Fig. 7: einen Querschnitt durch das Basisgehäuse entlang der Linie H-I,
- Fig. 8: einen Querschnitt durch as Basisgehäuse entlang der Linie L-M,
- Fig. 9: in Draufsicht ein Schmalseitenabdeckelement,
- Fig. 10: die Stirnansicht des Schmalseitenabdeckelementes nach Fig. 9,
- Fig. 11: einen Schnitt durch das Schmalseitenabdeckelement entlang der Linie A-B nach Fig. 9,
- Fig. 12: eine Seitenansicht des Schmalseitenabdeckelementes nach Fig. 9,
- Fig. 13: ein Oberseitenabdeckelement in Draufsicht,
- Fig. 14: das Oberseitenabdeckelement nach Fig. 13 auf die Schmalseite gesehen,
- Fig. 15: die Seitenansicht auf die Längsseite des Oberseitenabdeckelementes nach Fig. 13,
- Fig. 16: in Draufsicht eine Lochleiste,
- Fig. 17: die Lochleiste nach Fig. 16 auf die Längsseite gesehen,
- Fig. 18: die Lochleiste nach Fig. 16 auf die Schmalseite gesehen,
- Fig. 19: in perspektivischer Ansicht einen aus einem Basisgehäuse, zwei Lochleisten, einem Oberseitenabdeckelement und zwei Schmalseitenabdeckelementen zusammengebauten Geräteadapter und
- Fig. 20: in perspektivischer Ansicht einen aus einem Basisgehäuse, einem Oberseitenabdeckelement, einem Geräteanschlußelement und zwei Schmalseitenabdeckelementen zusammengebauten andersartigen Geräteadapter.

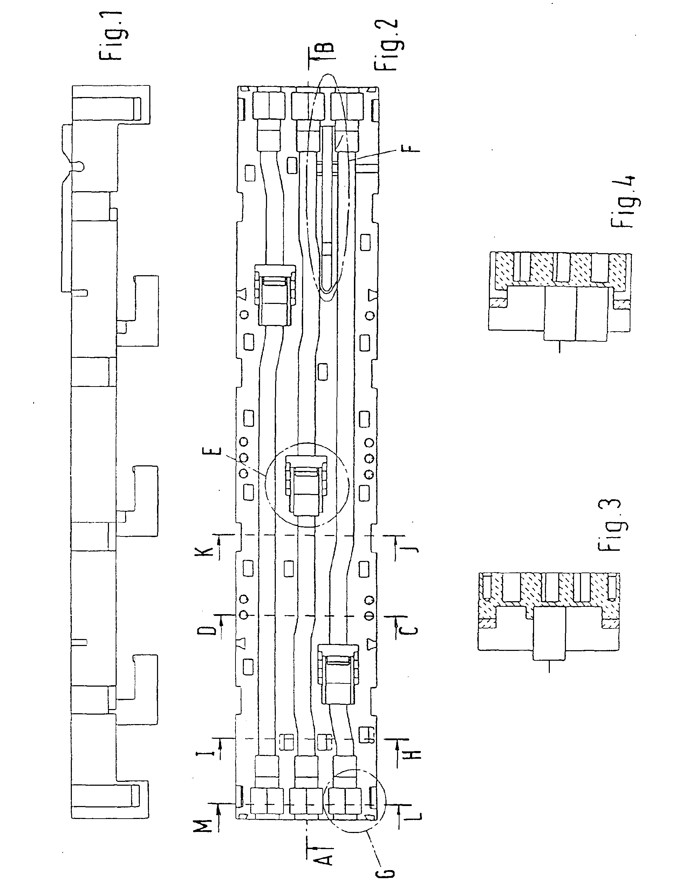

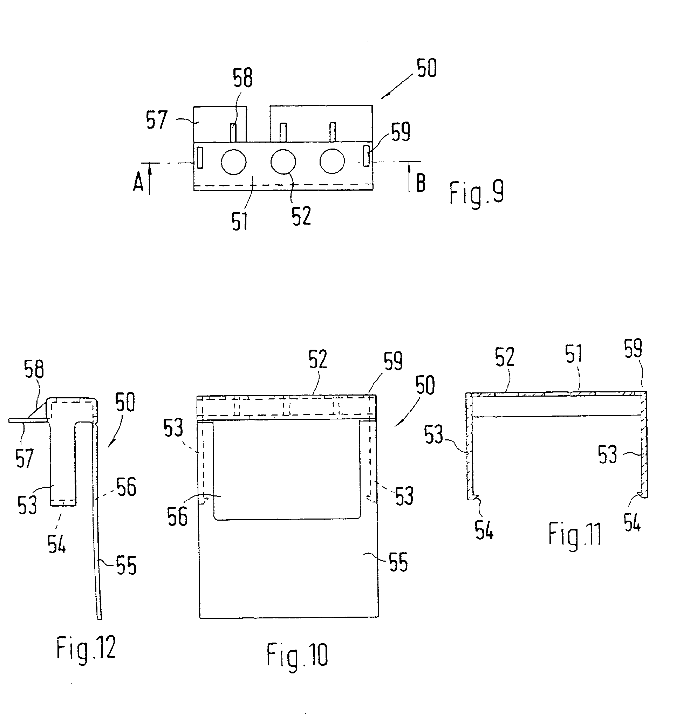

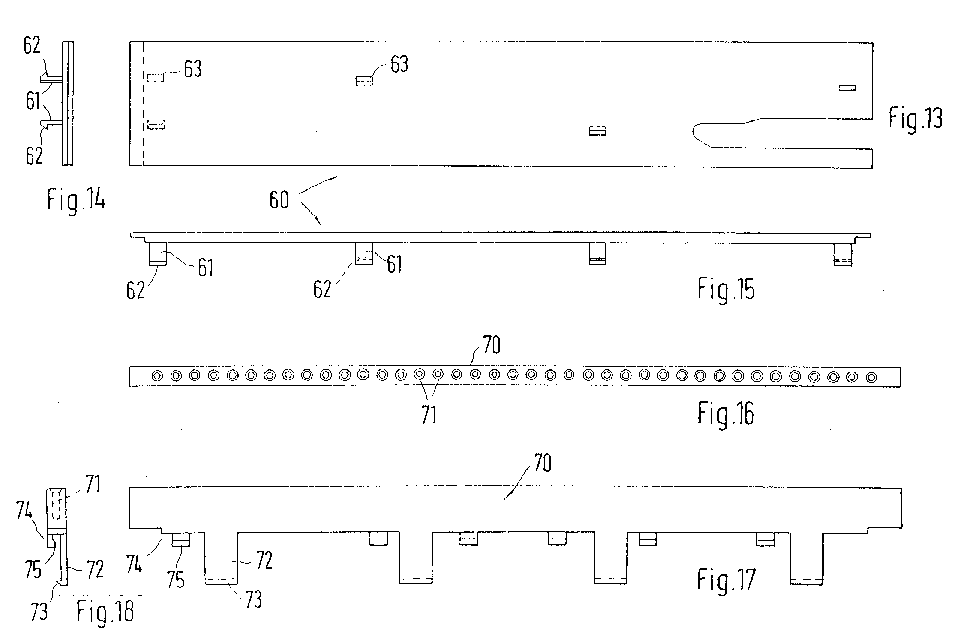

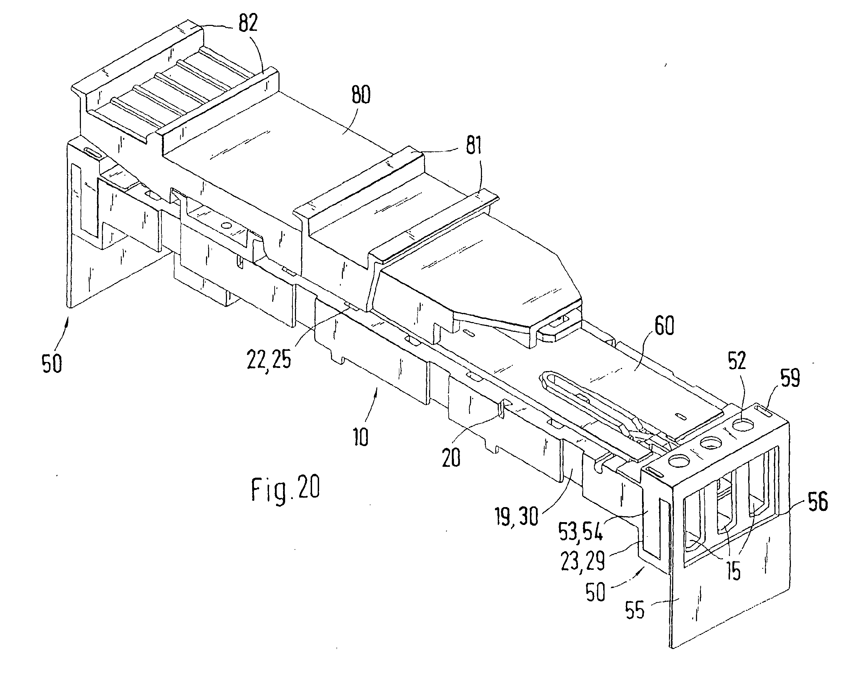

Der Multifunktionsadapter nach der Erfindung kann in unterschiedlichen Aufbauten erstellt werden. Ein Basisgehäuse 10 nach den Fig. 1 bis 8 bildet mit Schmalseitenabdeckelementen 50 nach Fig. 9 bis 12, Oberseitenabdeckelementen 60 nach Fig. 13 bis 15, Lochleisten 70 nach Fig. 16 bis 18, handelsüblichen Geräteanschlußelementen 80, wie sie aus Fig. 20 zu entnehmen sind, und handelsüblichen Aufsatzteilen und Schaltgeräten eine Art Bausatz, mit dem auf einfache Art allein mit Rastverbindungen die verschiedenartigsten Adapter zusammengesteckt werden können.

Das Basisgehäuse 10 wird als einstückiges Kunststoff-Spritzgußteil hergestellt, wobei die Einhängehaken 16, 17 und 18 einstückig angeformt und in Längsrichtung des Basisgehäuses 10 im Abstand der Stromsammelschienen des Sammelschienensystems versetzt sind. In die Oberseite des Basisgehäuses 10 sind im Ausführungsbeispiel drei Kontaktschienen-Aufnahmen 11, 12 und 13 nutartig eingeformt, wobei diese im Bereich der Einhängehaken 16, 17 und 18 als Rastaufnahme 28 zum Einrasten eines in einem Kontaktträger festgelegten Verbindungskontaktes erweitert sind. Die Einhängehaken 16, 17 und 18 bilden eine Aufnahme für den Verbindungskontakt, der zusätzlich mit dem Halteansatz 27 gehalten ist. Damit der Halteansatz 27 leicht entformt werden kann, ist im Einhängehaken, z.B. 17, ein Durchbruch 26 eingebracht.

Die Kontaktschienen-Aufnahmen 11, 12 und 13 sind bis an beide Schmalseiten des Basisgehäuses 10 geführt und bilden dort Kontakt-Aufnahmen 14 und 15 für handelsübliche Anschlußkontakte.

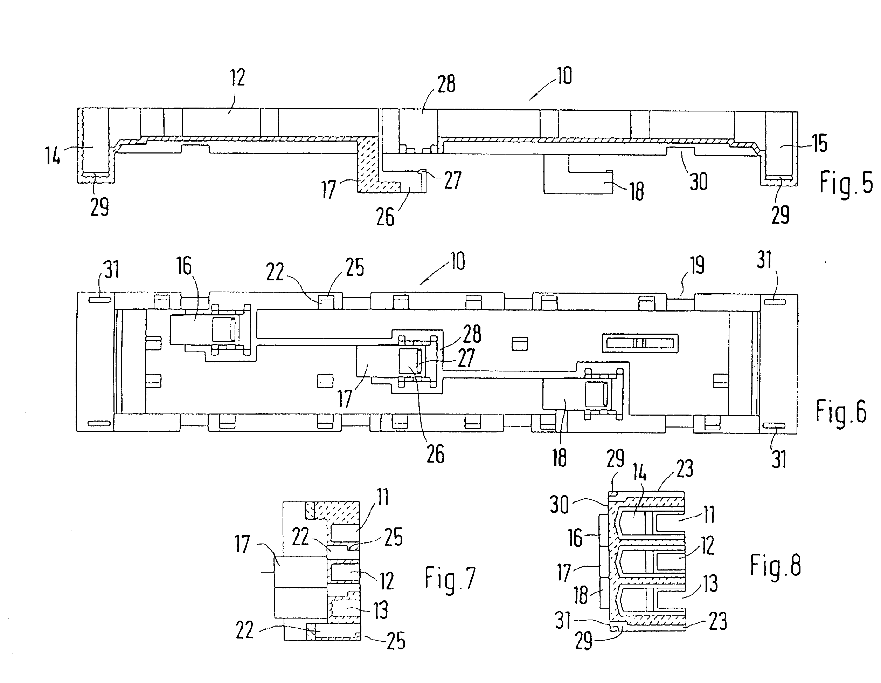

In die Oberseite des Basisgehäuses 10 sind als Steckaufnahmen ausgebildete Rastaufnahmen 22 und Rastansatz 25 eingebracht, wie sie insbesondere aus dem Schnitt nach Fig. 7 erkennbar sind. Die Rastaufnahmen 22 sind unten offen, damit der Rastansatz 25 leicht entformt werden kann. Dabei sind eine Reihe dieser Rastaufnahmen 22 entlang der Längsseitenwände des Basisgehäuses 10 in unterschiedlicher und umgekehrter Reihenfolge eingebracht, wobei die Rastansätze 25 der Rastaufnahmen 22 beider Längsseiten gegeneinander gerichtet sind. In die Außenseiten der Längsseitenwände des Basisgehäuses 10 sind zusätzlich vertikale Aufnahmenuten 19 eingeformt, die wie der Schnitt nach Fig. 4 zeigt, in Rastaufnahmen 30 übergehen.

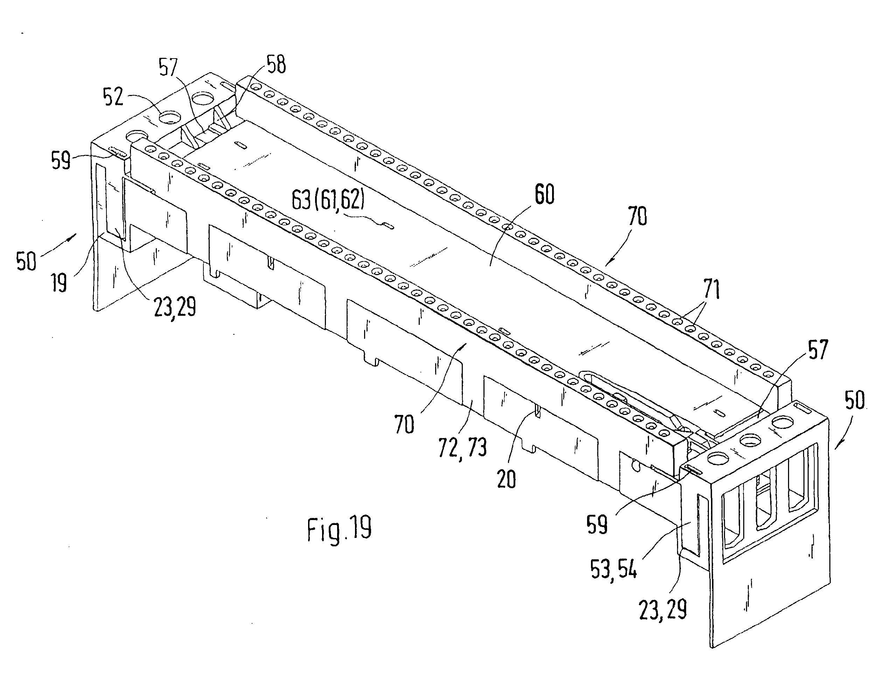

Mit diesen Rastaufnahmen 22 und den Aufnahmenuten 19 entlang der Längsseiten des Basisgehäuses 10 lassen sich Lochleisten 70 nach Fig. 16 bis 18 am Basisgehäuse 10 anbringen. Diese Lochleisten 70 tragen längsseitig entsprechend der Verteilung der Rastaufnahmen 22 und der Aufnahmenuten 19 Rastfedern 72 und 74, die bündig mit den Längsseiten der Lochleiste 70 abschließen. Die Rastfedern 72 und 74 tragen gegeneinander gerichtet Rastansätze 73 und 75, die so auf die Rastansätze 25 der Rastaufnahmen 22 und Rastaufnahmen 30 der Aufnahmenuten 19 abgestimmt und verteilt sind, daß die Lochleisten 70 vertikal auf das Basisgehäuse 10 aufgerastet werden können, wobei sie dann bündig mit den Längsseitenwänden des Basisgehäuses 10 abschließen, wie Fig. 19 zeigt. In den Oberseiten der Lochleisten 70 sind in einheitlicher Teilung Löcher 71 eingebracht, die Steckzapfen von handelsüblichen Aufsatzteilen aufnehmen können.

Die die Kontaktschienen-Aufnahmen 11, 12 und 13 begrenzenden Wandteile des Basisgehäuses 10 tragen in ihren Oberseiten weitere, als Steckaufnahmen ausgebildete Rastaufnahmen 22 mit Rastansätzen 25, so daß Oberseitenabdeckelemente 60 nach Fig. 13 bis 15 auf das Basisgehäsue 10 aufgerastet werden können. Dazu sind an der Unterseite des Oberseitenabdeckelementes 60 Rastfedern 61 mit Rastansatz 62 angeformt, die auf diese zusätzlichen Rastaufnahmen 22 mit Rastansatz 25 abgestimmt und ausgerichtet sind. Dabei bleiben die entlang den Längsseiten angeordneten Rastaufnahmen 22 für die Anbringung von Lochleisten 70 frei, so daß diese wahlweise anbringbar sind. Mit dem Oberseitenabdeckelement 60 werden die Kontaktschienen in den Kontaktschienen-Aufnahmen 11, 12 und 13 gehalten und berührungssicher abgedeckt, wie der Fig. 20 zu entnehmen ist. Auf dem Oberseitenabdeckelement 60 kann ein Geräteanschlußelement 80, wie es z.B. handelsüblich ist, aufgerastet oder anderweitig befestigt werden, das mit den angeformten Aufsatzteilen 81 und 82 schon auf vorgegebene Schaltgeräte abgestimmt ist.

Die Längs- und Schmalseitenwände des Basisgehäuses 10 sind zusätzlich mit vertikalen Schwalbenschwanznuten 20 und 24 versehen, so daß an allen Seiten des Basisgehäuses 10 weitere Adapter oder Zusatzgeräte angereiht werden können, wie der Fig. 2 zu entnehmen ist.

Am Ende der Längsseitenwände des Basisgehäuses 10 sind vertikale Aufnahmenuten 23 eingeformt, die im Bereich der Unterseite des Basisgehäuses 10 eine Rastaufnahme 29 bilden, so daß die Schmalseitenabdeckelemente 50 nach Fig. 9 bis 12 vertikal aufgerastet werden können. Die Rastaufnahmen 29 sind zur leichten Entformung der Unterseite des Basisgehäuses 10 hin offen. Die Schmalseitenabdeckelemente 50 weisen eine Abdeckplatte 55 mit Fensterdurchbruch 56 auf, der den Zugang zu den Kontakt-Aufnahmen 14 bzw. 15 des Basisgehäuses 10 freiläßt. An der Abdeckplatte 55 ist im Bereich der Oberseite eine rechtwinklig dazu stehende Deckplatte 51 mit Durchbrüchen 52 angeformt.

Über die Durchbrüche 52 besteht Zugang zu den Anschlußkontakten in den Kontakt-Aufnahmen 14 und 15. Im Bereich der Längsseitenwände trägt das Schmalseitenabdeckelement 50 Rastfedern 53 mit Rastansätzen 54, die in die Rastaufnahmen 29 des Basisgehäuses 10 einrasten. Die Rastfedern 53 schließen dann in den Aufnahmenuten 23 bündig mit den Längsseitenwänden des Basisgehäuses 10 ab. Die Deckplatte 51 trägt Durchbrüche 59, die das Entformen der Rastansätze 54 erleichtern. An die Deckplatte 51 schließt sich eine geteilte Anschlußplatte 57 an, die mittels Stegen 58 versteift ist.

Derartige Schmalseitenabdeckelemente 50 können nur an einer oder an beiden Schmalseiten des Basisgehäuses 10 angesteckt werden. Wie die Fig. 19 und 20 am Beispiel von zwei unterschiedlichen Geräteadaptern zeigen, läßt sich mit dem einheitlichen Basisgehäuse 10 in Verbindung mit den Schmalseitenabdeckelementen 50, den Oberseitenabdeckelementen 60, den Lochleisten 70 und handelsüblichen Geräteanschlußelementen 80 eine Vielzahl von unterschiedlichen Adaptern zusammenbauen, wobei diese Teile allein durch Rastverbindungen zusammengehalten werden.

## Patentansprüche

1. Multifunktionsadapter mit einem Basisgehäuse (10), an dem entsprechend der Anzahl von Stromsammelschienen eines Sammelschienensystems Einhängehaken (16, 17, 18) angeformt sind, die entsprechend dem Abstand der Stromsammelschienen in Längsrichtung des Basisgehäuses (10) gegeneinander versetzt und über Kontaktschienen-Aufnahmen (14, 15) zum Einsatz von Verbindungskontakten zugänglich sind, welche die eingesetzten Kontaktschienen mit den Stromsammelschienen verbinden, wobei die Schmalseitenwände, die Längsseitenwände und die Oberseite des Basisgehäuses (10) mit Rastansätzen versehene Rastaufnahmen (19, 30, 22, 25; 23,29) aufweisen, mittels derer mit entsprechend ausgebildeten und verteilten Rastfedern (53, 54; 61, 62; 72, 73; 74, 75) versehene Schmalseitenabdeckelemente (50) und Oberseitenabdeckelemente (60) mit dem Basisgehäuse (10) verbindbar sind,
**dadurch gekennzeichnet,**
**dass** Lochleisten (70) vorgesehen sind, die an ihrer Unterseite angeformte, erste Rastfedern (72,73) tragen, die auf die entlang der Längsseiten des Basisgehäuses (10) eingebrachten Rastaufnahmen (22,25) abgestimmt und ausgerichtet sind, und dass Geräteanschlusselemente (80) vorgesehen sind, die auf ihrer Unterseite verteilt angeformte Rastfedern tragen, die zumindest auf einen Teil der Rastaufnahmen (19, 30, 22, 25; 23, 29) abgestimmt und ausgerichtet sind.

2. Multifunktionsadapter nach Anspruch 1,
**dadurch gekennzeichnet,**
**daß** die Kontaktschienen-Aufnahmen (11,12,13) im Bereich der Einhängehaken (16,17,18) eine Rastaufnahme (28) bilden, in die der in einem Kontaktträger gehaltene Verbindungskontakt einrastbar ist.

3. Multifunktionsadapter nach Anspruch 1 oder 2,
**dadurch gekennzeichnet,**
**daß** die Kontaktschienen-Aufnahmen (11,12,13) im Bereich der Schmalseiten des Basisgehäuses (10) in Kontakt-Aufnahmen (14,15) enden, in die handelsübliche und mit den Kontaktschienen verbindbare Anschlußkontakte einsetzbar und mit einem Oberseitenabdeckelement (60) und/oder einem Schmalseitenabdeckelement (50) darin festlegbar sind.

4. Multifunktionsadapter nach einem der Ansprüche 1 bis 3,
**dadurch gekennzeichnet,**
**daß** in die Oberseite des Basisgehäuses (10) entlang der Längsseiten desselben eine Reihe von als vertikal ausgerichtete Steckaufnahmen ausgebildete Rastaufnahmen (22) mit Rastansatz (25) eingebracht sind.

5. Multifunktionsadapter nach einem der Ansprüche 1 bis 4,
**dadurch gekennzeichnet,**
**daß** in die Oberseite der die Kontaktschienen-Aufnahmen (11,12,13) begrenzenden Wandteile des Basisgehäuses (10) verteilt als vertikale Steckaufnahmen ausgebildete Rastaufnahmen (22,25) eingebracht sind.

6. Multifunktionsadapter nach Anspruch 4,
**dadurch gekennzeichnet,**
**daß** die Lochleisten (70) bündig mit den Außenseiten der Längsseitenwände des Basisgehäuses (10) abschließen und zusätzliche zweite Rastfedern (73,74) tragen, die in als Aufnahmenuten in den Längsseitenwänden ausgebildeten Rastaufnahmen (19,30) verrastbar sind, wobei die ersten Rastfedern (72,73) und die zweiten Rastfedern (73,74) bündig mit den Außenlängsseiten der Lochleisten (70) abschließen und mit ihren Rastansätzen (72,75) gegeneinander gerichtet sind.

7. Multifunktionsadapter nach einem der Ansprüche 1 bis 6,
**dadurch gekennzeichnet,**
**daß** die Oberseitenabdeckelemente (60) und die Geräteanschlußelemente (80) auf ihrer Unterseite verteilt angeformte Rastfedern (61,62) tragen, die zumindest auf einen Teil der Rastaufnahmen (22,25) abgestimmt und ausgerichtet sind, die in die Oberseite der die Kontaktschienen-Aufnahmen (11,12,13) begrenzenden Wandteile des Basisgehäuses (10) unter Freilassung der entlang der Längsseitenwände eingebrachten Rastaufnahmen (22,25) eingebracht sind.

8. Multifunktionsadapter nach einem der Ansprüche 1 bis 7,
**dadurch gekennzeichnet,**
**daß** die Schmalseitenabdeckelemente (50) eine Abdeckplatte (55) mit einem Fensterdurchbruch (56) zu den Kontakt-Aufnahmen (14,15) des Basisgehäuses (10) aufweisen,
**daß** an der Abdeckplatte (55) ein mit Durchbrüchen (52) zu den Kontakt-Aufnahmen (14,15) versehene Deckplatte (51) angeformt ist und
**daß** die Rastfedern (53,54) der Schmalseitenabdeckelemente (50) in als Außennuten mit Rastabsatz ausgebildete Rastaufnahmen (23,29) des Basisgehäuses (10) einrastbar sind.

9. Multifunktionsadapter nach einem der Ansprüche 1 bis 8,
**dadurch gekennzeichnet,**
**daß** die Außenseiten der Längsseitenwände und Schmalseitenwände des Basisgehäuses (10) mit vertikalen Schwalbenschwanznuten (20,24) versehen sind, über die weitere Adapter oder andere Abdeckelemente am Basisgehäuse (10) anreihbar oder anbringbar sind.

10. Multifunktionsadapter nach einem der Ansprüche 1 bis 9,
**dadurch gekennzeichnet,**
**daß** entlang der Oberseite der Längsseitenwände des Basisgehäuses (10) zusätzliche Lochreihen (21) zum Aufstecken an sich bekannter Aufsatzteile für Schaltgeräte eingebracht sind.

11. Multifunktionsadapter nach einem der Ansprüche 1 bis 10,
**dadurch gekennzeichnet,**
**daß** die Geräteanschlußelemente (80) mit unterschiedlichen, angeformten Aufsatzteilen (81,82) versehen sind.

## Claims

1. Multifunction adapter having a base housing (10), on which suspension hooks (16, 17, 18) corresponding to the number of bus bars of a bus bar system are formed, which are offset with respect to each other in the longitudinal direction of the base housing (10) in a manner corresponding to the spacing of the bus bars, and which are accessible via contact rail receptacles (14, 15) for the insertion of connecting contacts which connect the inserted contact rails with the bus bars, the narrow side walls, the longitudinal side walls and the top of the base housing (10) having snap-in receptacles (19, 30, 22, 25; 23, 29) provided with snap-in shoulders, by means of which narrow side cover elements (50), provided with correspondingly designed and distributed snap-in springs (53,54; 61,62; 72,73; 74,75), and top cover elements (60) can be connected to the base housing (10),
**characterised in that**
perforated strips (70) are provided which bear on their underside integrally moulded first snap-in springs (72, 73) which are matched to and aligned with the snap-in receptacles (22,25) introduced along the longitudinal sides of the base housing (10); and **in that** equipment connection elements (80) are provided bearing integrally moulded snap-in springs distributed on their underside which are matched to and aligned with at least some of the snap-in receptacles (19,30,22,25; 23,29).

2. Multifunction adapter according to claim 1, **characterised in that** the contact rail receptacles (11,12,13) in the region of the suspension hooks (16,17,18) form a snap-in receptacle (28) into which the connecting contact held in a contact carrier can be snapped.

3. Multifunction adapter according to claim 1 or 2, **characterised in that** the contact rail receptacles (11,12,13) in the region of the narrow sides of the base housing (10) terminate in contact receptacles (14,15) into which commercially available connecting contacts, which can be connected to the contact rails, can be inserted and fixed in place with a top cover element (60) and/or a narrow side cover element (50).

4. Multifunction adapter according to one of claims 1 to 3, **characterised in that** a row of snap-in receptacles (22) with snap-in shoulders (25) and designed as vertically aligned plug receptacles is introduced into the top of the base housing (10) along the longitudinal sides of same.

5. Multifunction adapter according to one of claims 1 to 4, **characterised in that** the snap-in receptacles (22,25), designed as vertical plug receptacles, are distributed and introduced into the top of the wall elements of the base housing which delimit the contact rail receptacles (11,12,13).

6. Multifunction adapter according to claim 4, **characterised in that** the perforated strips (70) terminate flush with the outsides of the longitudinal side walls of the base housing (10) and bear additional second snap-in springs (73,74) which can be snapped into snap-in receptacles (19,30) in the form of receiving grooves in the longitudinal side walls, the first snap-in springs (72,73) and the second snap-in springs (73,74) terminating flush with the outside longitudinal sides of the perforated strips (70) and facing each other with their snap-in shoulders (72,75).

7. Multifunction adapter according to one of claims 1 to 6, **characterised in that** the top cover elements (60) and the equipment connection elements (80) bear integrally moulded snap-in springs (61,62) distributed on their underside, which are matched to and aligned with at least some of the snap-in receptacles (22,25) which are introduced into the wall elements of the base housing (10) delimiting the contact rail receptacles (11,12,13), leaving free the snap-in receptacles (22,25) introduced along the longitudinal side walls.

8. Multifunction adapter according to one of claims 1 to 7, **characterised in that** the narrow side cover elements (50) have a cover plate (55) with a cutout window (56) through to the contact receptacles (14,15) of the base housing (10),
**in that** integrally moulded onto cover plate (55) is a cover plate (51) provided with openings (52) to the contact receptacles (14,15), and
**in that** the snap-in springs (53,54) of the narrow side cover elements (50) can be snapped into snap-in receptacles (23,29) of the base housing (10) which are in the form of outside grooves with a snap-in shoulder.

9. Multifunction adapter according to one of claims 1 to 8, **characterised in that** the outsides of the longitudinal side walls and narrow side walls of the base housing (10) are provided with vertical dovetail grooves (20,24) via which additional adapters or other cover elements can be added or attached to the base housing (10).

10. Multifunction adapter according to one of claims 1 to 9, **characterised in that** additional rows of perforations (21), for plugging in switchgear attachments which are known per se, are introduced along the top of the longitudinal side walls of the base housing (10).

11. Multifunction adapter according to one of claims 1 to 10, **characterised in that** the equipment connection elements (80) are provided with differing, integrally moulded attachments (81, 82).

## Revendications

1. Adaptateur multifonctions, avec un boîtier de base (10) sur lequel sont formés des crochets d'accrochage (16, 17, 18) en un nombre correspondant au nombre de barres omnibus d'un système de barres omnibus, crochets qui sont mutuellement décalés dans la direction longitudinale du boîtier de base (10) dans une mesure correspondant à l'espacement des barres omnibus, et qui sont accessibles via des logements (11, 12, 13) de rails de contact afin d'insérer des contacts de liaison qui relient aux barres omnibus les rails de contact insérés, sachant que les parois des petits côtés, les parois des grands côtés et le dessus du boîtier de base (10) présentent des logements de crantage (19, 30, 22, 25 ; 23, 29), pourvus de saillies de crantage, au moyen desquels peuvent être assemblés au boîtier de base (10) des éléments (50) de recouvrement de petits côtés et des éléments (60) de recouvrement de dessus qui sont pourvus de ressorts à cran d'arrêt (53, 54 ; 61, 62 ; 72, 73 ; 74, 75) configurés et répartis d'une manière correspondante,
**caractérisé en ce qu'**il est prévu des barrettes à trous (70) qui portent, formés sur le dessous des barrettes, des premiers ressorts à cran d'arrêt (72, 73) qui sont adaptés à des logements de crantage (22, 25) ménagés le long des grands côtés du boîtier de base (10) et sont alignés avec eux,
et **en ce qu'**il est prévu des éléments (80) de raccordement d'appareil qui portent des ressorts à cran d'arrêt qui sont formés en étant répartis sur le dessous desdits éléments et qui sont adaptés à au moins une partie des logements de crantage (19, 30, 22, 25 ; 23, 29) et sont alignés avec eux.

2. Adaptateur multifonctions selon la revendication 1, **caractérisé en ce que** les logements (11, 12, 13) de rails de contact forment, dans la région des crochets d'accrochage (16, 17, 18), un logement de crantage (28) dans lequel peut être enclenché un contact de liaison maintenu dans un porte-contacts.

3. Adaptateur multifonctions selon la revendication 1 ou 2, **caractérisé en ce que** les logements (11, 12, 13) de rails de contact se terminent, dans la région des petits côtés du boîtier de base (10), par des logements de contacts (14, 15) dans lesquels des contacts de raccordement habituels, qui peuvent être reliés aux rails de contact, peuvent être insérés et fixés en position par un élément (60) de recouvrement de dessus et/ou un élément (50) de recouvrement de petit côté.

4. Adaptateur multifonctions selon l'une des revendications 1 à 3, **caractérisé en ce qu'**une rangée de logements de crantage (22) réalisés sous la forme de logements d'emboîtement orientés verticalement et pourvus de saillies de crantage (25) est ménagée dans le dessus du boîtier de base (10) le long des grands côtés de ce dernier.

5. Adaptateur multifonctions selon l'une des revendications 1 à 4, **caractérisé en ce que** des logements de crantage (22, 25) conçus comme logements d'emboîtement verticaux sont ménagés, en y étant répartis, dans le dessus des parties de parois du boîtier de base (10) qui délimitent les logements (11, 12, 13) de rails de contact.

6. Adaptateur multifonctions selon la revendication 4, **caractérisé en ce que** les barrettes à trous (70) se terminent à fleur des côtés extérieurs des parois des grands côtés du boîtier de base (10) et portent des deuxièmes ressorts à cran d'arrêt (73, 74), supplémentaires, qui peuvent être enclenchés dans des logements de crantage (19, 30) réalisés sous la forme de rainures réceptrices dans les parois des grands côtés, sachant que les premiers ressorts à cran d'arrêt (72, 73) et les deuxièmes ressorts à cran d'arrêt (73, 74) se terminent à fleur des grands côtés extérieurs des barrettes à trous (70) et que leurs saillies de crantage (72, 75) sont mutuellement opposées.

7. Adaptateur multifonctions selon l'une des revendications 1 à 6, **caractérisé en ce que** les éléments (60) de recouvrement de dessus et les éléments (80) de raccordement d'appareil portent des ressorts à cran d'arrêt (61, 62) qui sont formés en étant répartis sur le dessous desdits éléments et qui sont adaptés à et alignés avec au moins une partie des logements de crantage (22, 25), qui sont ménagés dans le dessus des parties de parois du boîtier de base (10) qui délimitent les logements (11, 12, 13) de rails de contact en laissant libres les logements de crantage (22, 25) ménagés le long des parois des grands côtés.

8. Adaptateur multifonctions selon l'une des revendications 1 à 7, **caractérisé en ce que** les éléments (50) de recouvrement de petits côtés présentent une plaque de recouvrement (55) dotée d'une ouverture de regard (56) vers les logements de contact (14, 15) du boîtier de base (10),
**en ce qu'**une plaque de couvercle (51) munie d'ouvertures (52) vers les logements de contact (14, 15) est formée sur la plaque de recouvrement (55),
et **en ce que** les ressorts de crantage (53, 54) des éléments (50) de recouvrement de petits côtés peuvent être enclenchés dans des logements de crantage (23, 29) du boîtier de base (10) qui sont réalisés sous la forme de rainures extérieures dotées d'un gradin de crantage.

9. Adaptateur multifonctions selon l'une des revendications 1 à 8, **caractérisé en ce que** les côtés extérieurs des parois des petits côtés et des parois des grands côtés du boîtier de base (10) sont pourvus de rainures verticales (20, 24) en queue d'aronde au moyen desquelles d'autres adaptateurs ou d'autres éléments de recouvrement peuvent être alignés ou installés sur le boîtier de base (10).

10. Adaptateur multifonctions selon l'une des revendications 1 à 9, **caractérisé en ce que** des rangées de trous supplémentaires (21) sont ménagées le long du dessus des parois des grands côtés du boîtier de base (10) afin d'emboîter des éléments d'enfilage en soi connus pour des appareils de commutation.

11. Adaptateur multifonctions selon l'une des revendications 1 à 10, **caractérisé en ce que** les éléments (80) de raccordement d'appareil sont pourvus de différents éléments d'enfilage (81, 82) formés sur eux.
